# EUROPÄISCHE PATENTSCHRIFT

(11) **EP 2 454 476 B1**
(45) Veröffentlichungstag und Bekanntmachung des Hinweises auf die Patenterteilung: **24.04.2013**
(21) Anmeldenummer: 10734687.6
(22) Anmeldetag: 13.07.2010
(51) Int. Cl.: F03D 11/00, F03D 7/02

(54) **BREMSEINRICHTUNG FÜR WINDENERGIEANLAGE**
BRAKING DEVICE FOR A WIND POWER PLANT
SYSTÈME DE FREIN POUR ÉOLIENNE

(30) Priorität: 13.07.2009 DE 102009032873
(43) Veröffentlichungstag der Anmeldung: 23.05.2012
(73) Patentinhaber: Pintsch Bubenzer GmbH, 57548 Kirchen-Wehbach (DE)
(72) Erfinder: SCHNEIDER, Andreas, 57462 Olpe (DE)
(74) Vertreter: Gerhard, Till
(86) Internationale Anmeldenummer: PCT/EP2010/004255
(87) Internationale Veröffentlichungsnummer: WO 2011/006636

(56) Entgegenhaltungen:
- DE-A1- 19 906 798
- DE-B- 1 206 223
- FR-A- 1 001 749
- US-A- 3 835 964

## Beschreibung

Die vorliegende Erfindung betrifft eine Bremseinrichtung für eine Windenergieanlage. Die Bremseinrichtung weist eine Bremstrommel auf sowie mehrere radial nach außen auf die Bremstrommel wirkende Bremselemente, auf die eine Hydraulikzylindereinheit wirkt. Dabei sind die Bremselemente in Umfangsrichtung über eine Koppeleinheit festgelegt, die mit einem festliegenden Bauteil fest verbindbar ist.

Bauartbedingt werden solche Trommelbremsen üblicherweise an Wellenenden angreifend eingesetzt.

Für Windkraftanlagen sind sogenannte Rotorbremsen erforderlich, die entweder als reine Haltebremsen ausgelegt sind und dann lediglich das erforderliche Haltemoment für den Rotor im Stillstand aufbringen müssen. Rotorbremsen können auch als Betriebsbremse ausgelegt sein, die dann als zweites, unabhängiges Bremssystem zusätzlich zur aerodynamischen Bremsung des Rotors wirkt und weiter im Stillstand als Haltebremse dient.

Bei einer Windkraftanlage treten an der Rotornabe bei geringen Drehzahlen vergleichsweise hohe Drehmomente auf, die in einem nachgeschalteten Getriebe in höhere Drehzahlen bei geringeren Drehmomenten umgewandelt werden. Die Ausgangswelle des Getriebes (hohe Drehzahl, niedriges Drehmoment) treibt einen Generator an, der die Rotationsenergie in elektrische Energie umwandelt. Bekannte Rotorbremsen werden meist als Scheibenbremsen (siehe z.B. DE 37 14 859 A1) ausgeführt und wirken normalerweise auf die Ausgangswelle des Getriebes beziehungsweise die Eingangswelle des Generators. Scheibenbremsen haben jedoch den Nachteil, dass sie neben der das eigentliche Bremsmoment aufbauenden Torsionskraft durch den exzentrischen Angriff der Bremsbacken an der Scheibe auch eine Querkraft auf die abzubremsende Welle ausüben, die zu einer unerwünschten Biegebeanspruchung führt. Diese Biegebeanspruchung kann zwar dadurch reduziert werden, dass mehrere symmetrisch über den Scheibenumfang verteilte Bremsbackeneinheiten verwendet werden. Biegelasten können jedoch nicht völlig ausgeschlossen werden, da bei mehreren angreifenden Bremsbackeneinheiten durch ungleichmäßigen Verschleiß der Bremselemente bzw. durch eine ungleichmäßige, asymmetrische Bremskraftverteilung trotz der symmetrischen Anordnung solche Biegebelastungen auftreten können. Darüber hinaus benötigen solche Scheibenbremsen relativ viel Platz; und zwar sowohl in radialer als auch in axialer Richtung.

Trommelbremsen, die für die Montage an Wellenenden - oder im Kraftfahrzeugbereich an Achsschenkeln (siehe z.B. DE 199 06 798 A1 und US 3, 835, 964) - geeignet sind, können bei Windkraftanlagen an der Primärwelle (Ausgangswelle des Getriebes beziehungsweise Antriebswelle des Generators) normalerweise nicht verwendet werden, da die Primärwelle zum einen durchgängig Getriebe und Generator miteinander verbindet und zum anderen in der Regel als Hohlwelle ausgeführt ist, durch die ein sogenanntes Pitchrohr geführt wird, über das die Blattverstellung realisiert wird. Das sich mit Rotorgeschwindigkeit drehende Pitchrohr nimmt auch Strom- oder Hydraulikleitungen auf, die entsprechende Stellantriebe für die Blattverstellung, die in der Nabe untergebracht sind, versorgen. Eine durchgehende Welle oder eine solche Durchführung von Versorgungsleitungen ist mit üblichen Trommelbremsen nicht realisierbar.

Es besteht also die Aufgabe, eine Bremsvorrichtung bereitzustellen, die in Trommelbremsenausführung zum Abbremsen der Primärwelle geeignet ist, ohne dass der Antrieb der Blattverstelleinrichtung dadurch beeinträchtigt wird.

Diese Aufgabe wird durch die Bremsvorrichtung gemäß Anspruch 1 gelöst. So ist eine Bremstrommel vorgesehen, welche auf die Primärwelle wirkt. Dies kann entweder eine Generatorwelle oder aber auch die Ausgangswelle des Getriebes sein. Weiter sind mehrere radial nach außen auf die Bremstrommel wirkende Bremselemente vorgesehen, die in der Regel die Bremsbeläge selbst und geeignete Bremsbelagträger umfassen. Dabei wirkt eine zentrale Fluidzylindereinheit auf die Bremselemente und verstellt diese gleichmäßig beim Bremsen nach außen gegen die Innenseite der Bremstrommel. Dabei werden die auf die Bremselemente wirkenden Umfangskräfte nicht über die Hydraulikzylindereinheit, sondern über eine fixierte Koppeleinheit aufgenommen, welche die Bremselemente in Umfangsrichtung, nämlich zur Drehrichtung der Bremstrommel/Primärwelle, festlegt. Bremstrommel, Fluidzylindereinheit und Koppeleinheit weisen jeweils eine zentrale koaxial ausgerichtete Durchgangsöffnung auf, die von der Primärwelle selbst bzw. einer unabhängig von der Bremsvorrichtung drehbaren Sekundärwelle durchsetzbar ist. Dies kann eine Stellwelle oder ein sogenanntes Pitchrohr sein, welches zur Verstellung der Blattverstellmechanismen vorgesehen ist. Diese Stellwelle beziehungsweise das Pitchrohr dreht sich dabei üblicherweise mit der Geschwindigkeit der Rotorblattnabe (ca. 14 Umdrehungen pro Minute).

Die Weiterbildungen der Ansprüche 2 bis 5 betreffen die Gestaltung der Bremstrommel. Dabei ist gemäß Anspruch 2 eine radial verlaufende Rippenstruktur vorgesehen, welche den Kraft- und Wärmefluss beim Bremsbetrieb in der Bremstrommel verbessert. Die Gestaltung gemäß Anspruch 3 dient einer besonders steifen und auch unter Betriebsbedingungen formstabilen Trommelform, die einen wartungsarmen Dauerbetrieb ermöglicht. Die Merkmale der Ansprüche 4 und 5 verbessern die Selbstkühlung der Bremstrommel und damit auch der anderen Bremsenbauteile durch eine verbesserte, kühlende Luftführung (Konvektion) durch die Bremseinrichtung.

Die Gestaltung der Bremselemente gemäß Anspruch 6 verbessert zum einen die Wärmeabfuhr aus dem Bereich der eigentlichen Bremsflächen über die Bremsbeläge und die Bremskörper der Bremselemente in die Umgebung und verhindert damit eine Erwärmung der Hydraulikzylindereinheit. Zum anderen kann bei entsprechender Gestaltung der Rippen- beziehungsweise Gitterstruktur eine formstabile und günstige Gussausführung der Bremselemente realisiert werden.

Die Merkmale der Ansprüche 7 bis 9 betreffen eine Nachstelleinrichtung, die gemäß Anspruch 7 einen gewünschten Lüftspalt selbsttätig nachstellend ausgleicht und konstant hält. Die Nachstellung erfolgt gemäß Anspruch 8 über ein vorgespanntes Nockenelement, welches an einem Anschlagelement angreift, das um einen Stellweg verstellbar ist, der dem Lüftspalt entspricht. Dabei kann der Lüftspalt gemäß Anspruch 9 über ein Stellelement, insbesondere eine Stellschraube, gegen eine Federkraft verstellbar sein. Diese Maßnahmen erhöhen in Kombination oder für sich genommen die Betriebsdauer der Bremseinrichtung und verlängern die Wartungsintervalle, die insbesondere bei Windkraftanlagen einen wichtigen Kostenfaktor darstellen.

Die Rückholeinrichtung gemäß Anspruch 10 stellt sicher, dass bei gelüfteter Bremse unabhängig von der Einbaulage der Bremseinrichtung jedes der Bremselemente zuverlässig in seiner Lüftstellung gehalten wird und bei sich drehender Primärwelle nicht an der sich ebenfalls drehenden Bremstrommel schleift. Dadurch wird ein ungleichmäßiger Verschleiß der Bremselemente verhindert und der Verschleiß an sich verringert. Die Ansprüche 11, 12 und 13 betreffen eine Generator-/Getriebeeinheit für eine Windenergieanlage mit einer erfindungsgemäßen Bremseinrichtung (Anspruch 11), einen Antriebsstrang für eine Windenergieanlage (Anspruch 12) sowie eine Windenergieanlage selbst (Anspruch 13), die jeweils wenigstens mit einer erfindungsgemäßen Bremseinrichtung versehen sind.

Ein Ausführungsbeispiel der vorliegenden Erfindung wird nachfolgend anhand der Zeichnungen beispielhaft beschrieben. Dabei zeigt
- Fig. 1: eine perspektivische Ansicht der erfindungsgemäßen Bremseinrichtung von der Nabenseite her,
- Fig. 2: eine perspektivische Ansicht der in Fig. 1 dargestellten Bremseinrichtung von hinten,
- Fig. 3: eine Ansicht der in Fig. 1 dargestellten Bremseinrichtung ohne Bremstrommel,
- Fig. 4: eine Schnittdarstellung der Bremseinrichtung,
- Fig. 5: eine Schnittansicht der Fluidzylindereinheit,
- Fig. 6: eine Detaildarstellung der Nachstelleinrichtung,
- Fig. 7: eine teilgeschnittene Vorderansicht (von der Nabenseite her) der Bremseinrichtung ohne Bremstrommel,
- Fig. 7A: eine Detailansicht (Bereich A) des Rückstellmechanismus,
- Fig. 8: eine perspektivische Ansicht einer alternativen Bremstrommel, und
- Fig. 9: ein Einbauschema.

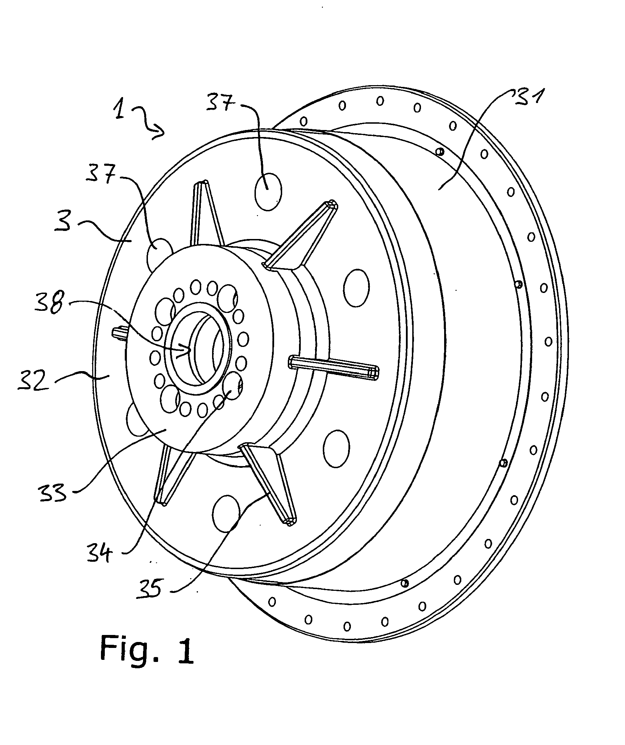

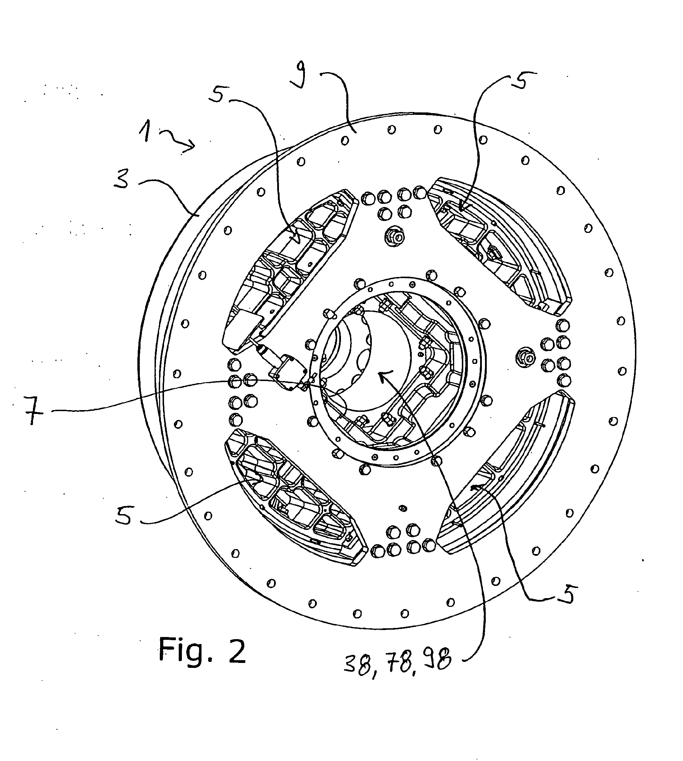

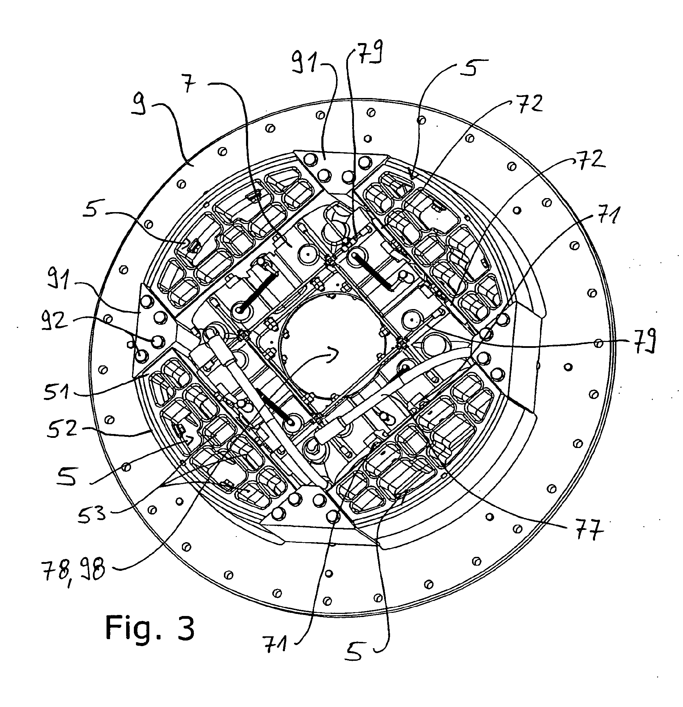

Die Fig. 1 bis 4 zeigen den grundsätzlichen Aufbau und die Funktion einer Bremseinrichtung 1, deren Hauptkomponenten eine Bremstrommel 3, vier Bremselemente 5, eine zentrale Fluidzylindereinheit 7 und eine als Scheibensockel 9 ausgebildete Koppeleinheit sind.

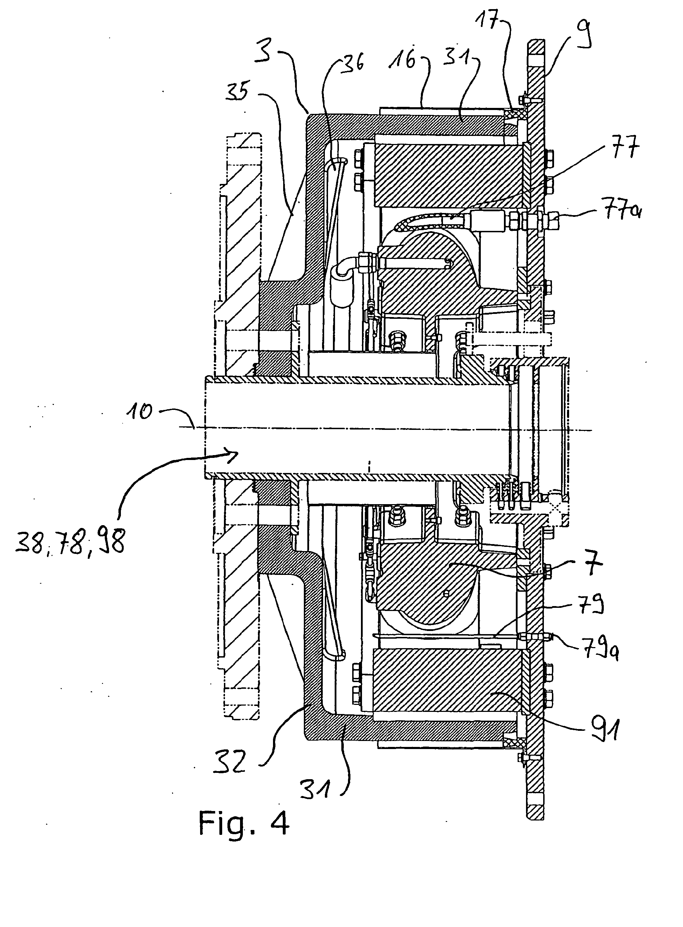

Die Bremstrommel 3 hat einen topfartigen Aufbau mit einem zylindrischen Rand 31, einem Boden 32, der in seiner Mitte den Nabenbereich 33 trägt, der mit Durchgangsbohrungen 34 versehen ist, über die an eine abzubremsende Welle ankoppelbar ist. Nabenbereich 33, Boden 32 und zylindrischer Rand 31 sind über eine Rippenstruktur 35, 36 miteinander verbunden. Dabei verlaufen vom Nabenbereich 33 ausgehend Außenrippen 35 den Boden 32 durchdringend, in fluchtende Innenrippen 36 (siehe Fig. 4) übergehend zum zylindrischen Rand 31. Diese Rippenstrukturen 35, 36 verbessern zum einen die Gestaltfestigkeit der Bremstrommel 3 und verbessern den Kraftfluss zwischen dem zylindrischen Rand 31 und dem Nabenbereich 33. Zusätzlich sorgt die Rippenstruktur 35, 36 für Luftverwirbelungen, die im Innern der Bremstrommel 3 liegende Elemente (Bremselemente 5 und Fluidzylindereinheit 7) kühlen.

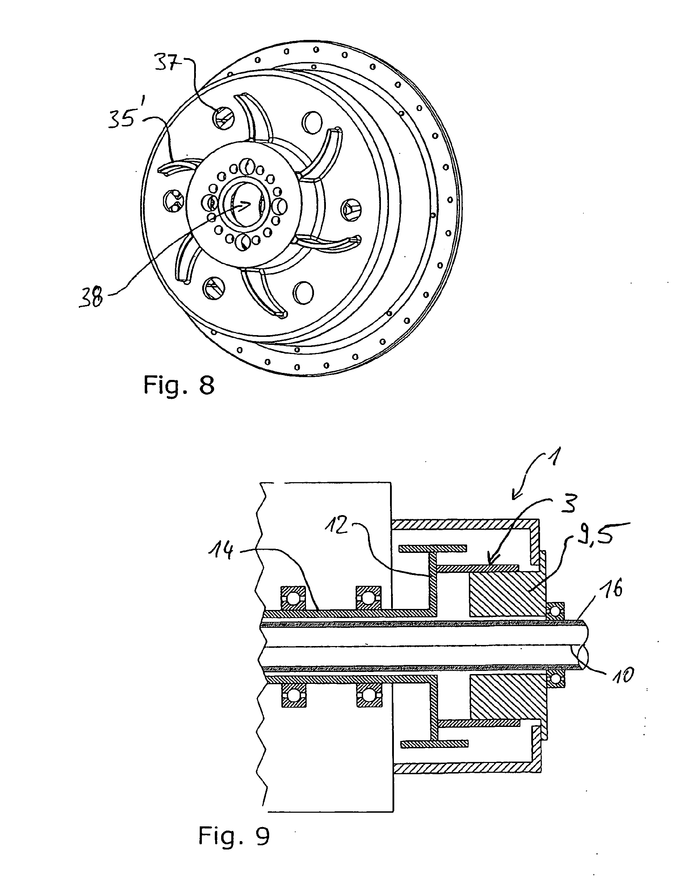

Optional kann der Boden 32 Öffnungen 37 aufweisen, die den Belüftungs- und Kühleffekt verstärken. Die Rippenstruktur 35', 36 kann auch in einer Ausführung (Fig. 8) turbinen- bzw. propellerartig ausgebildet sein und so in Verbindung mit den Öffnungen 37 einen gerichteten Luftstrom durch die Bremseinrichtung 1 aufbauen. Dies kann insbesondere bei häufigen dicht aufeinanderfolgenden Bremsvorgängen dazu beitragen, die beim Bremsen entstehende Wärme zuverlässig aus der Bremseinrichtung 1 abzuführen (belüftete Bremse) und dazu beitragen, eine thermische Belastung der Bauteile, insbesondere der Bremstrommel 3 und der Bremselemente 5 zu verringern.

Die Bremselemente 5 umfassen jeweils einen Belagträger 51 mit gekrümmten Außenflächen, an denen die Reibbeläge 52 fixiert sind. Die Außenflächen der Reibbeläge 52 sind ebenfalls zylindrisch gekrümmt und entsprechen den Innenflächen des zylindrischen Randes 31 der Bremstrommel 3, an dem sie beim Bremsen angreifen.

Die Belagträger 51 weisen im Innern eine offenzellige Rippen-/Gitterstruktur 53 auf, die zum einen die auf die Innenseite der Belagträger 51 wirkenden Stellkräfte auf die Außenfläche und damit auf die Reibbeläge 52 und schließlich den zylindrischen Rand 31 der Bremstrommel 3 übertragen. Zum anderen erlaubt die Gitterstruktur 53 eine erhebliche Materialeinsparung, so dass die Belagträger 51 entweder aus einem von einem entsprechend gestalteten Strangpressprofil abgeschnitten werden können oder auch als Gussteile hergestellt werden können. Darüber hinaus verbessert die Gitterstruktur 53 die Wärmeabfuhr aus den Reibbelägen 52 in die Umgebung, die besonders wirksam ist, wenn die Gitterstruktur 53 in Axialrichtung, also entlang der Wellenachse 10 durchströmt werden.

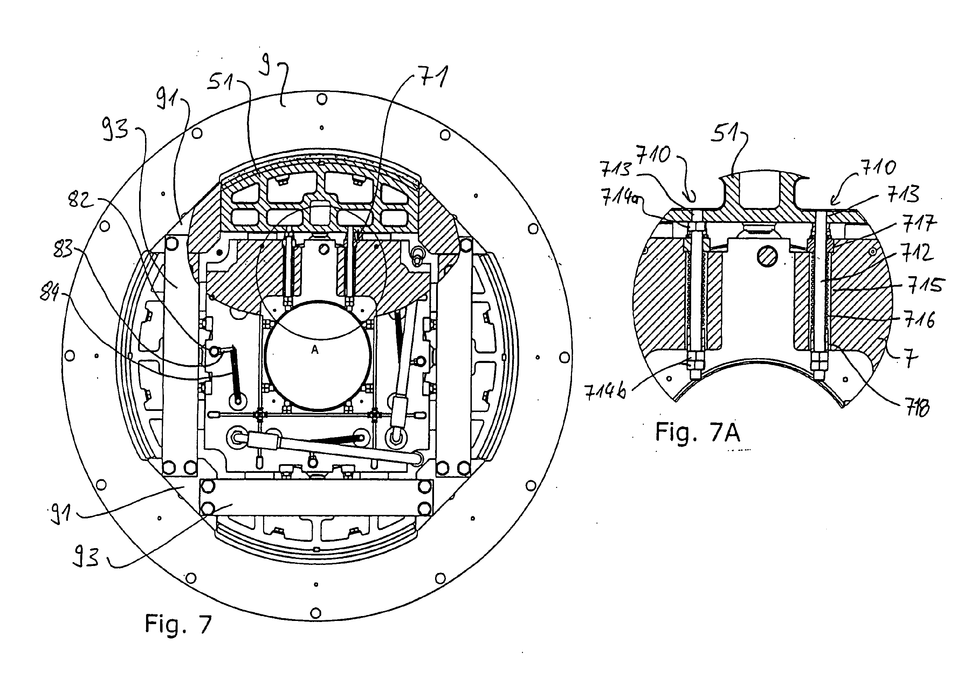

In Umfangsrichtung sind die Bremselemente 5 über am Scheibensockel 9 fixierte Stützprismen 91, die an den in Achsrichtung verlaufenden Flanken der Belagträger 51 ansetzen und gleitend in Radialrichtung führen. Dabei sind die Stützprismen 91 über Fixierungen 92 fest am Scheibensockel 9 fixiert. In einer nicht dargestellten Ausführung können die Stützprismen 91 auch einstückig am Scheibensockel 9 (beispielsweise angeformt oder angegossen) ausgebildet sein. In axialer Richtung sind die Bremselemente 5 über Querlaschen 93 fixiert, die wiederum an den Stützprismen 91 befestigt sind (siehe Fig. 7). Auf der anderen Seite sind die Bremselemente durch den Scheibensockel 9 oder entsprechende Laschen befestigt. Die Bremselemente 5 sind weiter an der Fluidzylindereinheit 7 über Rückstelleinrichtungen 71 gehalten, deren Aufbau und Funktion weiter unten beschrieben wird. Damit sind die Bremselemente 5 in allen Richtungen festgelegt, wobei ihr Bewegungsweg radial nach außen durch die Innenseite des zylindrischen Randes 31 der Bremstrommel 3 beschränkt ist.

Die Fluidzylindereinheit 7 ist im vorliegenden Ausführungsbeispiel als Hydraulikblock ausgebildet, der einen etwa quadratischen Grundriss aufweist. An jeder der vier Außenseiten ragen jeweils die Enden zweier Stellkolben 72 heraus, deren Stirnflächen auf die an den Innenseiten der Bremselemente 5 bzw. der Belagträger 51 angreifen. Die Stellkolben 72 sind von außen nach innen über einen Abstreifer 73 und einen O-Ring 75 in einen Zylinderraum 76 eingedichtet, wobei alle Zylinderräume 76 kommunizierend miteinander verbunden sind und über Hydraulikanschlüsse mit Hydraulikleitungen 77 gekoppelt sind, über die die Zylinderräume 76 und die Verbindungsleitungen in der Fluidzylindereinheit 7 mit einem Hydraulikfluid restlos gefüllt werden können. Eine angeschlossene (nicht dargestellte) Hydrauliksteuerung baut in den Zylinderräumen 76 den Stelldruck auf, der die Stellkolben 72 nach außen drückt, so dass diese beim Bremsen die Bremselemente 5 radial nach außen gegen die Innenseite des zylindrischen Randes 31 der Bremstrommel 3 drücken. Zum Unterbrechen des Bremsvorgangs wird der Druck in der Hydraulikleitung 77 und den Zylinderräumen abgebaut und die Bremswirkung wird unterbrochen. Zusätzlich zieht eine Rückstelleinrichtung 71 (vgl. Fig. 7) die Bremselemente 5 zurück in ihre Lüftstellung.

Um mögliche Hydraulikleckagen ins Innere der Bremseinrichtung 1 zu verhindern, sind die Zwischenräume 76b zwischen den Abstreifern 73 und den O-Ringen 75 über Leitungen 79 kommunizierend miteinander verbunden. Tritt nun zum Beispiel durch einen defekten O-Ring 75 Hydraulikflüssigkeit nach außen in diesen Zwischenraum 78, wird er über die Leitungen 79 abgeführt, so dass keine Bremsflüssigkeit ins Innere der Bremseinrichtung 1 gelangen kann. An die Leitungen 79 ist ein entsprechender Detektor (nicht dargestellt) angeschlossen, der beim Austritt von Flüssigkeit gegebenenfalls einen Alarm auslösen kann.

Die Rückstelleinrichtung 71 umfasst für jedes Bremselement 5 vier Rückstellelemente 710, die jeweils eine Gewindestange 712 umfassen, die mit einem Ende in einer Gewindebohrung 713 im Belagträger fixiert ist und dort über eine Mutter 714a gegen Herausdrehen gesichert ist. Die Gewindestange 712 durchsetzt eine Durchgangsbohrung 715 in der Fluidzylindereinheit 7 sowie eine Stellfeder 716, die sich bezüglich der Fluidzylindereinheit 7 an einem Anschlag 717 abstützt und unter Spannung an einer Hülse 718 angreift, die von zwei Muttern 714b auf der Gewindestange 712 gehalten wird. Jede Stellfeder 716 zieht dabei über die Hülse 718 und die Muttern 714b an der Gewindestange 712 angreifend den Belagträger 51, der über die Gewindebohrung 713 mit den Gewindestangen 712 gekoppelt ist, radial nach innen und lösen so nach dem Druckabbau in den Zylinderräumen die Bremselemente 5 von der Bremstrommel 3, so dass die Bremstrommel 3 wieder eine daran gekoppelte Welle freigibt. Mit Hilfe der Rückstelleinrichtungen 71 wird sichergestellt, dass sich alle Bremselemente 5 völlig unabhängig von ihrer Einbaulage vollständig von der Bremstrommel 3 lösen können. Damit wird zum einen der Verschleiß verhindert, der sonst bei schleifendem Betrieb auftreten könnte. Gleichzeitig wird bei einer waagerecht verlaufenden Wellenachse 10 verhindert, dass sich Reibbeläge 52 ungleichmäßig abnutzen können, da bei so einem Einbau ein Teil der Bremselemente 5 schwerkraftbedingt ihre Lüftstellung einnehmen würden, während ein anderer Teil der Bremselemente 5 ebenfalls schwerkraftbedingt mit ihren Reibbelägen 52 an der Innenseite des Bremstrommel 3 anliegen und sich abnutzen würden.

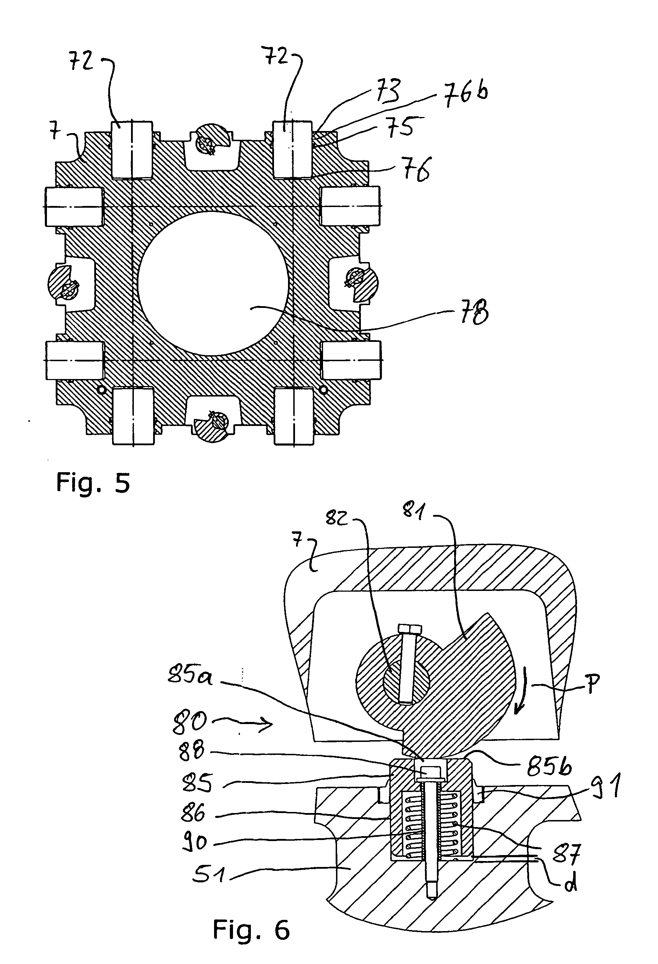

Um bei ständigem Bremsbetrieb die Abnutzung der Reibbeläge 52 und der Bremstrommel 3 auszugleichen, wirkt zwischen der Fluidzylindereinheit 7 und jedem Bremselement 5 jeweils eine Nachstelleinrichtung 80 (siehe Fig. 6). Die Nachstelleinrichtung 80 umfasst eine Nockenscheibe 81, deren Durchmesser in Umfangsrichtung schneckenartig zunimmt. Die Nockenscheibe 81 ist auf einer Stellwelle 82 fixiert, die parallel zur Wellenachse 10 drehbar in der Fluidzylindereinheit 7 aufgenommen wird. Dabei greift an der Stellwelle 82 über einen Querstift 83 eine Schraubenfeder 84 an, welche die Nockenscheibe 81 so verstellt, dass sie eine Stellung einnimmt, in der ihr Durchmesser zunimmt (vgl. Pfeilrichtung P in Fig. 6). Die Außenfläche der Nockenscheibe 81 greift an einem im Bremselement 5 bzw. im Belagträger 51 angeordnetes Stellelement an, welches in Radialrichtung um den Bremsspaltweg d verstellbar angeordnet ist. Im vorliegenden Ausführungsbeispiel ist dazu ein Anschlagbolzen 85 vorgesehen, der in eine entsprechende Ausnehmung 86 im Belagträger 51 eingesetzt ist. Die Stirnfläche 85b des Anschlagbolzens 85 ragt dabei teilweise aus der hier als Sackloch ausgebildeten Ausnehmung 86 heraus; an der Stirnfläche 85b greift die Nockenscheibe 81 an. Der Anschlagbolzen 85 wird im Innern von einer Schraubenfeder 87, die sich am Sacklochboden abstützt, nach außen gedrückt (in Richtung Nockenscheibe 81). Der Stellweg wird jedoch über eine Anschlagschraube 88 begrenzt, die in einer Ausnehmung 85a im Kopf des Anschlagbolzens 85 angreift und den Anschlagbolzen 85 die Schraubenfeder 87 durchsetzend im Belagträger 51 fixiert. Die Einschraubtiefe der Anschlagschraube wird über die Länge einer Hülse 90 festgelegt, die von der Anschlagschraube 88 durchsetzt wird. So wird auch der Stellweg d des Anschlagbolzens 85 und damit der Lüftspalt festgelegt. Der Lüftspalt kann also über die Wahl der Hülsenlänge und die Einschraubtiefe der Anschlagschraube 88 variiert werden.

In der Bremsstellung liegen die Reibbeläge 52 an der Innenseite des zylindrischen Randes 31 der Bremstrommel 3 an. Dabei nimmt der Anschlagbolzen 85 die (in Fig. 6 gezeigte) Stellung ein, in der er am Kopf der Anschlagschraube 88 anschlägt. Gleichzeitig liegt die Stirnfläche 85b am Rand der Nockenscheibe 81 an. Die Stellkraft an der Nockenscheibe 81, die über die Länge des Querstiftes 83 und die Schraubenfeder 84 einstellbar ist, ist so auf die Federkraft der Schraubenfeder 87 abgestimmt, dass die vorgespannte Nockenscheibe 81 den Anschlagbolzen 85 nicht im Sackloch 86 verschieben kann. Umgekehrt sind die Wirkflächen des Anschlagbolzens 85 (die an der Nockenscheibe anliegende Stirnfläche 85b) und die Randfläche der Nockenscheibe 81 so gestaltet, dass beim Lüften der Bremse, wenn der Belagträger 51 durch die Rückstelleinrichtung 71 nach innen in Richtung Fluidzylindereinheit 7 gezogen wird, die über den Anschlagbolzen 85 ausgeübte Kraft auf die Nockenscheibe 81 nicht dazu führt, dass diese ihre Drehstellung verändert. So wird sichergestellt, dass die Bremselemente 5 bzw. die Belagträger 51 immer nur um die Spaltbreite d nach innen verstellt wird.

Tritt beim Bremsvorgang eine Abnutzung (an der Bremstrommel 3 und/oder an den Reibbelägen 52) auf, so bewegen sich die Bremselemente 5 und damit die Belagträger 51 weiter nach außen in Richtung Bremstrommel als dies durch den Spalt d vorgegeben ist. Dabei löst sich die Stirnfläche 85b des Anschlagbolzens 85 geringfügig von der Nockenscheibe 81 und gibt diese frei. Die am Querstift 83 angreifende Feder 84 sorgt dafür, dass sich dann die Nockenscheibe 81 so weit in Pfeilrichtung dreht, dass ihre Randfläche wieder an der Stirnfläche 85b des Anschlagbolzens 85 anliegt. Damit ist der Lüftspalt d wieder festgelegt, und beim nächsten Lösen oder Lüften der Bremseinrichtung können die Bremselemente 5 wieder nur um den Betrag d gelüftet werden.

Die Stellfedern 716 der Rückstelleinrichtungen 71 und die Schraubenfedern 87 der Nachstelleinrichtungen 80 sind so aufeinander abgestimmt, dass die Stellfedern 716 die Federkraft der Schraubenfeder 87 überwinden können, wenn der Druck in den Zylinderräumen abgebaut ist.

Um zu verhindern, dass die Nachstelleinrichtungen 80 verschmutzen, ist der Anschlagbolzen 85 über einen Abstreifer 91 eingedichtet.

Fig. 9 zeigt eine typische Einbausituation der Bremseinrichtung 1 in einer Windenergieanlage. Die Bremseinrichtung 1 ist über einen Anschlussflansch 12 mit einer Primärwelle 14 koppelbar. Die Primärwelle 14 kann entweder die Ausgangswelle eines Getriebes einer Windenergieanlage sein oder aber auch die Eingangswelle eines nachgeschalteten Generators. Über den Anschlussflansch 12 kann aber auch die Generatornabe angeschlossen sein.

Alle wesentlichen Bauteile der Bremseinrichtung, nämlich die Bremstrommel 3, die Fluidzylindereinheit 7 und der Scheibensockel 9 weisen jeweils eine zentrale Öffnung 38, 78 und 98 auf, die von einer Sekundärwelle oder einem sogenannten Pitchrohr durchsetzt wird, das sich zusammen mit der Rotornabe der Windturbine dreht und die Energiezufuhr zu dort vorgesehenen Stellantrieben aufnimmt, über die die Rotorblätter verstellt werden können. Dieses sogenannte Pitchrohr 16 dreht sich unabhängig von der Primärwelle 14. Die zentralen Öffnungen 38, 78, 98 können auch so gestaltet sein, dass die Primärwelle 14 vollständig durch die Bremseinrichtung 1 geführt wird und dann beispielsweise am Ende gelagert wird. Die Ausführung der Bremseinrichtung 1 als Trommelbremse gestattet wegen der besonders kompakten Bauweise, vollständig innerhalb des Generatorrotors aufgenommen zu werden und benötigt keinen zusätzlichen Bauraum.

Um Verschmutzungen des Generators durch Bremsstaub zu verhindern, ist am Scheibensockel 9 eine Abschirmung 16 vorgesehen und der Randspalt zwischen Scheibensockel 9 und dem zylindrischen Rand 31 ist über eine Abdichtbürste 17 zusätzlich abgeschirmt. Die Hydraulikleitungen 77 und 79 enden jeweils in ebenfalls in der im Scheibensockel untergebrachten Anschlüssen 77a und 79a, über die dann die Bremseinrichtung angesteuert werden kann.

Weitere Ausführungen und Varianten der Erfindung ergeben sich aus den nachfolgenden Ansprüchen.

## Patentansprüche

1. Bremseinrichtung (1) für eine Windenergieanlage mit:
einer Bremstrommel (3), welche auf eine Primärwelle, insbesondere eine Generatorwelle, wirkt,
mehreren radial nach außen auf die Bremstrommel (3) wirkenden Bremselementen (5),
einer auf die Bremselemente wirkenden zentralen Hydraulikzylindereinheit (7) und
einer mit einem bezüglich der Primärwelle festliegenden Bauteil fest verbindbaren Koppeleinheit (9), welche die Bremselemente (5) in Umfangsrichtung bzw. Drehrichtung der Primärwelle festlegt, wobei
Bremstrommel (3), Fluidzylindereinheit (7) und Koppeleinheit (9) jeweils eine zentrale Durchgangsöffnung (38, 78, 98) aufweisen, die von einer unabhängig von der Primärwelle und der Bremsvorrichtung (1) drehbaren Sekundärwelle, insbesondere eine Stellwelle bzw. sog. Pitch-Welle und/oder der Primärwelle selbst, durchsetzbar ist.

2. Bremseinrichtung (1) nach Anspruch 1, bei welcher die Bremstrommel (3) mit einer radial verlaufenden Rippenstruktur (35, 36) versehen ist, welche zur Last- und Wärmeübertragung dient.

3. Bremseinrichtung (1) nach Anspruch 2, bei welcher die Rippenstruktur (35, 36) von der Innenseite eines Trommelrandes (31) zur Außenseite eines Nabenbereichs (33) einen Trommelboden (32) durchsetzend verläuft.

4. Bremseinrichtung (1) nach Anspruch 3, bei welcher der Trommelboden (32) mit Ausnehmungen (37) zur Belüftung vorgesehen ist.

5. Bremseinrichtung (1) nach Anspruch 4, bei welcher die Rippenstruktur (35, 36) mit den Ausnehmungen eine Propeller- bzw. Turbinenstruktur bildet ist, um den Trommelinnenraum zu belüften und so die Bremselemente (5) und die Hydraulikzylindereinheit (7) zu kühlen.

6. Bremseinrichtung (1) nach einem der vorhergehenden Ansprüche, bei welcher die Bremselemente (5) eine in Axialrichtung durchlässig ausgebildete Rippen- bzw. Gitterstruktur (53) aufweisen.

7. Bremseinrichtung (1) nach einem der vorhergehenden Ansprüche, bei welcher zwischen jedem Bremselement und der Hydraulikzylindereinheit (7) jeweils eine Nachstelleinrichtung (80) wirkt, welche im Betrieb die Abnutzung der Bremsflächen in Radialrichtung selbsttätig nachstellend ausgleicht und so einen Lüftspalt weitgehend konstant hält.

8. Bremseinrichtung (1) nach Anspruch 7, bei welcher die Nachstelleinrichtung (80) ein in eine Wirkrichtung (P) vorgespanntes Nockenelement (81) aufweist, welches mit seiner Wirkfläche an einem vorgespannten, um einen dem Lüftspalt entsprechenden Stellweg (d) verstellbaren Anschlagelement (85) angreift.

9. Bremseinrichtung (1) nach Anspruch 8, bei welcher der Stellweg (d) des Anschlagelements (85) und damit der Lüftspalt über ein Stellelement (88, 90), insbesondere eine Stellschraube (88) gegen eine Federkraft verstellbar ist.

10. Bremseinrichtung (1) nach einem der vorhergehenden Ansprüche, bei welcher eine Rückstelleinrichtung (71) jedes der Bremselemente (5) in seiner Lüftstellung hält und für jedes Bremselement (4) ein Stellelement (72) vorgesehen ist, über welches das Bremselement (4) beim Bremsen bei Fluidwirkung gegen eine Wirkung der Rückstelleinrichtung (71) in seine Bremsstellung bringbar ist.

11. Generator-/Getriebeeinheit für eine Windenergieanlage mit einer Bremseinrichtung (1) nach einem der vorhergehenden Ansprüche.

12. Antriebseinheit für eine Windenergieanlage mit einer Generator-/Getriebeinheit nach Anspruch 11 wobei die Primärwelle eine Ausganswelle einer Getriebebaugruppe bzw. eine Generatorwelle ist, welche über eine windkraftgetriebene Eingangswelle angetrieben wird.

13. Windeneergieanlage mit einer Antriebseinheit nach Anspruch 12.

## Claims

1. A braking device (1) for a wind energy installation, with:
a brake drum (3) which acts on a primary shaft, particularly a generator shaft,
a plurality of braking elements (5) acting radially outwards on the brake drum (3),
a central hydraulic cylinder unit (7) acting on the braking elements and
a coupling unit (9) which can be securely connected to a component which is fixed with respect to the primary shaft, which coupling unit fixes the braking elements (5) in the circumferential direction or direction of rotation, wherein
brake drum (3), fluid cylinder unit (7) and coupling unit (9) each have a central passage opening (38, 78, 98), through which a secondary shaft which can be rotated independently of the primary shaft and the braking apparatus (1), particularly an adjustment shaft or so-called pitch shaft, and/or the primary shaft itself can be passed.

2. The braking device (1) according to Claim 1, in which the brake drum (3) is provided with a radially running rib structure (35, 36) which is used for load and heat transfer.

3. The braking device (1) according to Claim 2, in which the rib structure (35, 36) runs from the inside of a drum edge (31) to the outside of a hub region (33), passing through a drum base (32).

4. The braking device (1) according to Claim 3, in which the drum base (32) is provided with recesses (37) for ventilation.

5. The braking device (1) according to Claim 4, in which the rib structure (35, 36) with the recesses is formed as a propeller or turbine structure, in order to ventilate the drum interior and thus to cool the braking elements (5) and the hydraulic cylinder unit (7).

6. The braking device (1) according to one of the preceding claims, in which the braking elements (5) have a rib or lattice structure (53) which is permeable in the axial direction.

7. The braking device (1) according to one of the preceding claims, in which one re-adjustment device (80) in each case acts between each braking element and the hydraulic cylinder unit (7), which re-adjustment device compensates the wearing of the braking surfaces in the radial direction automatically in a re-adjusting manner during operation and thus keeps an air gap substantially constant.

8. The braking device (1) according to Claim 7, in which the re-adjustment device (80) has a cam element (81) prestressed in a direction of action (P), which acts by means of its active surface on a prestressed stop element (85) which can be adjusted by a travel (d) corresponding to the air gap.

9. The braking device (1) according to Claim 8, in which the travel (d) of the stop element (85) and thus the air gap is adjustable counter to a spring force via an adjustment element (88, 90), particularly an adjustment screw (88).

10. The braking device (1) according to one of the preceding claims, in which a return motion device (71) holds each of the braking elements (5) in its aeration position and for each braking element (4), an adjustment element (72) is provided, by means of which the braking element (4) can be brought into its braking position during braking with the action of fluid counter to an action of the return motion device (71).

11. A generator/gear box unit for a wind energy installation, with a braking device (1) according to one of the preceding claims.

12. A drive unit for a wind energy installation with a generator/gear box unit according to Claim 11, wherein the primary shaft is an output shaft of a gear box module or a generator shaft which is driven via an input shaft driven by wind force.

13. A wind energy installation with a drive unit according to Claim 12.

## Revendications

1. Dispositif de freinage (1) pour une éolienne comprenant :
un tambour de frein (3) qui agit sur un arbre primaire, notamment un arbre de générateur,
plusieurs éléments de freinage (5) agissant radialement vers l'extérieur sur le tambour de frein (3),
un module de cylindre hydraulique central (7) agissant sur les éléments de freinage et
un module de raccordement (9) pouvant être relié de manière fixe à un composant stationnaire par rapport à l'arbre primaire qui fixe les éléments de freinage (5) dans le sens périphérique ou le sens de rotation de l'arbre primaire, dans lequel
le tambour de frein (3), le module de cylindre fluidique (7) et le module de raccordement (9) présentent chacun une ouverture de passage centrale (38, 78, 98) qui peut être traversée par un arbre secondaire pouvant tourner indépendamment de l'arbre primaire et du dispositif de freinage (1), notamment un arbre de réglage ou ce qu'on appelle un arbre de tangage et/ou l'arbre primaire lui-même.

2. Dispositif de freinage (1) selon la revendication 1, dans lequel le tambour de frein (3) est pourvu d'une structure nervurée s'étendant radialement (35, 36) qui sert au transfert de charge et thermique.

3. Dispositif de freinage (1) selon la revendication 2, dans lequel la structure nervurée (35, 36) s'étend du côté interne d'un bord de tambour (31) au côté externe d'une région de moyeu (33) en traversant un fond de tambour (32).

4. Dispositif de freinage (1) selon la revendication 3, dans lequel le fond de tambour (32) est pourvu d'évidements (37) pour l'aération.

5. Dispositif de freinage (1) selon la revendication 4, dans lequel la structure nervurée (35, 36) est formée avec les évidements en tant que structure d'hélice ou de turbine pour aérer l'espace interne de tambour et refroidir ainsi les éléments de freinage (5) et le module de cylindre hydraulique (7).

6. Dispositif de freinage (1) selon l'une quelconque des revendications précédentes, dans lequel les éléments de freinage (5) présentent une structure nervurée ou quadrillée (53) réalisée de manière perméable dans la direction axiale.

7. Dispositif de freinage (1) selon l'une quelconque des revendications précédentes, dans lequel un dispositif de rajustement (80), qui compense automatiquement par rajustement en service l'usure des surfaces de freinage dans la direction radiale et maintient ainsi une fente d'aération essentiellement constante, agit à chaque fois entre chaque élément de freinage et le module de cylindre hydraulique (7).

8. Dispositif de freinage (1) selon la revendication 7, dans lequel le dispositif de rajustement (80) présente un élément de came (81) précontraint dans un sens d'action (P) qui est appliqué avec sa surface active sur un élément de butée précontraint (85) pouvant être déplacé d'une course de réglage (d) correspondant à la fente d'aération.

9. Dispositif de freinage (1) selon la revendication 8, dans lequel la course de réglage (d) de l'élément de butée (85) et ainsi la fente d'aération peut être déplacée par le biais d'un élément de réglage (88, 90), notamment une vis de réglage (88) à l'encontre une force élastique.

10. Dispositif de freinage (1) selon l'une quelconque des revendications précédentes, dans lequel un dispositif de rappel (71) maintient chacun des éléments de freinage (5) dans sa position d'aération et un élément de réglage (72), par le biais duquel l'élément de freinage (4) peut être amené dans sa position de freinage lors du freinage en cas d'action fluidique à l'encontre d'une action du dispositif de rappel (71), est prévu pour chaque élément de freinage (4).

11. Module de générateur/engrenage pour une éolienne avec un dispositif de freinage (1) selon l'une quelconque des revendications précédentes.

12. Module d'entraînement pour une éolienne avec un module de générateur/engrenage selon la revendication 11, dans lequel l'arbre primaire est un arbre de sortie d'un bloc d'engrenage ou un arbre de générateur qui est entraîné par le biais d'un arbre d'entrée entraîné par énergie éolienne.

13. Eolienne avec un module d'entraînement selon la revendication 12.
